# EUROPÄISCHE PATENTSCHRIFT

(11) **EP 2 185 855 B1**
(45) Veröffentlichungstag und Bekanntmachung des Hinweises auf die Patenterteilung: **12.10.2011**
(21) Anmeldenummer: 08783481.8
(22) Anmeldetag: 13.09.2008
(51) Int. Cl.: F16M 13/04

(54) **STATIV FÜR KOMPAKTE VIDEOKAMERAS**
SUPPORT FOR COMPACT VIDEO CAMERA
SUPPORT POUR CAMÉRA VIDEO COMPACTE

(30) Priorität: 14.09.2007 CH 14362007
(43) Veröffentlichungstag der Anmeldung: 19.05.2010
(73) Patentinhaber: Stoffel, Marco, 8004 Zürich (CH); Tarcsay, Maria Katharina, 8049 Zürich (CH); Looser, Christian Michael, 8005 Zürich (CH)
(72) Erfinder: Stoffel, Marco, 8004 Zürich (CH); Tarcsay, Maria Katharina, 8049 Zürich (CH); Looser, Christian Michael, 8005 Zürich (CH)
(74) Vertreter: Rüfenacht, Philipp Michael
(86) Internationale Anmeldenummer: PCT/CH2008/000381
(87) Internationale Veröffentlichungsnummer: WO 2009/033308

(56) Entgegenhaltungen:
- WO-A-01/75353
- WO-A-03/023274
- US-A- 4 017 168
- US-A- 4 526 308
- US-A- 5 839 704
- US-A- 5 963 749
- US-A1- 2005 061 933

## Beschreibung

### Technisches Gebiet

Die Erfindung bezieht sich auf eine Kamerafiihrungshilfe für bewegte Aufnahmen mit kompakten Videokameras, im Folgenden Stativ genannt.

### Stand der Technik

Bewegte Aufnahmen, beispielsweise Kamerafahrten, werden beim Filmen von sich bewegenden Objekten eingesetzt um dem Zuschauer die Dynamik der Situation besser vermitteln zu können. Aufnahmen im Sportbereich können beispielshalber als Anwendungsgebiet genannt werden. Als bewegte Aufnahme wird das Filmen während sich die Kamera fortbewegt verstanden. Bei der Erstellung von bewegten Aufnahmen ist ein stetiger Bildverlauf ein wichtiger Qualitätsfaktor. Ruckartige Bewegungen können Aufnahmen unbrauchbar machen, da das gefilmte Objekt unter Umständen nicht mehr erkennbar erscheint. Ein weiterer Faktor, welcher die Attraktivität einer Aufnahme zu steigern vermag, ist eine Aufnahmeperspektive, welche einen speziellen Blickwinkel (Perspektive) auf das zu filmende Objekt ermöglicht.

Bei bekannten Kameraführungshilfen für bewegte Aufnahmen kommen verschiedene Prinzipien zur Stabilisierung des Bildes und zur Realisierung von attraktiven Perspektiven zum Einsatz.

Bei den sogenannten Schwebestativen wird ein Gegengewicht zur Kamera in einem System aus starren Gestängen so angebracht, dass der Schwerpunkt des Gesamtsystems mit dem Bediengriff zusammenfällt und durch die stabilisierende Wirkung der ausbalancierten Trägheit eine schwebende Aufnahme realisiert werden kann. Dieses Prinzip birgt den Nachteil, dass zusätzliches Gewicht zur Kamera getragen werden muss, was bei kompakten Kameras den Vorteil ihres geringen Gewichts kompensiert. Schwebestativsysteme für kompakte Kameras geraten sehr leicht in Schwingung, da sie trotzt des Gegengewichts eine zu kleine Trägheit besitzen. In den meisten Fällen kann die Aufnahme nur über das kameraeigene Display kontrolliert werden, was eine Positionierung der Kamera im Blickfeld des Benutzers bedingt und somit eine Aufnahme mit einer ausgefallenen Perspektive verhindert oder aber sehr unergonomisch gestaltet. Viele Systeme dieses Typs ermöglichen es zwecks Perspektivenwechsel die Kamera mit dem Gegengewicht zu vertauschen und so mit dem invertierten Schwebestativ aus bodennahen Perspektiven zu filmen. Dazu muss die Kamera jedoch vom System getrennt, neu fixiert, ausgerichtet und somit die Aufnahme unterbrochen werden.

Weiter existieren Ansätze, welche mit dem Hebelgesetz arbeiten. Sie erlauben durch starre Gestänge die Kamera an Handgriffen, welche möglichst weit entfernt vom Brennpunkt der Kameralinse liegen, zu führen. Die entstehenden Griffmöglichkeiten erhöhen die Ergonomie beim Filmen und wackelnde Bewegungen in den Kamerawinkeln werden aufgrund der übersetzenden Wirkung des Hebels nur reduziert auf die Aufnahme übertragen. Diese Ansätze ermöglichen eine sehr spontane Kameraführung bezüglich Perspektive, weisen jedoch Schwächen auf, wenn rasche Richtungswechsel während der Aufnahme nötig sind. Der Länge des verwendeten Hebels entsprechend muss für einen Richtungswechsel ein grosser Weg zurückgelegt werden, da die Kamera meist fest mit dem Gestänge verbunden ist. Bei knappen Platzverhältnissen oder abrupten Richtungswechseln des zu filmenden Objekts schränkt dies den Einsatz ein.

Bei den sogenannten Kameradollys wird die Kamera auf einem Rollwagen, der auf Rädern oder Schienen läuft, angebracht um eine fliessende Aufnahme zu realisieren. Schienen können nur auf ebenem Gelände ohne verhältnismässig hohen Aufwand verlegt werden und verunmöglichen eine spontane Kameraführung. Der Gebrauch von Kameradollys beansprucht relativ viel (ebenen) Platz und eignet sich denkbar schlecht zur Aufnahme von ungeplanten Szenen. Vorhandene Produkte sind sehr teuer da aufwendige, sehr präzise Mechanik zum Einsatz kommt.

Vorbekannte Kameraführungshilfen gehen beispielsweise aus der US 4,526,308 (Dovey), der US 3,332,593 (Fauser), der US 5,963,749 (Nicholson) sowie der US Re 32,213 und US 4,017,168 (Brown) hervor.

Eine weitere Kameraführungshilfe zeigt die WO 03/023274 (Sachtler GmbH & Co. KG). Diese betrifft eine kardanische Aufhängevorrichtung für eine Kamera-Balance-Vorrichtung, die über eine Aufhängevorrichtung beispielsweise mit einem Federarm einer westenartigen Tragvorrichtung (einem sog. Körperstativ) verbunden ist. Sie weist zwei einander kreuzende Gelenkachsen auf sowie eine Drehachse, welche durch die vertikale Gelenkachse verläuft. Zwischen einem gelenkeingangsseitigen Befestigungselement und einem gelenkausgangsseitigen Befestigungselement ist eine Zentriereinrichtung vorgesehen. Die beiden Befestigungselemente können als Handgriffe ausgebildet sein, so dass das Stativ beidhändig geführt werden kann. Das Kamerastativ umfasst ein Pendelrohr, an dessen oberen Ende eine Kamera-Befestigungsvorrichtung angebracht ist, die eine Halteplatte zur Befestigung der Kamera umfasst. Am unteren Ende des Pendelrohrs befindet sich eine Aufnahmevorrichtung für Kontergewichte, welche u. a. eine Monitor-Halterung umfasst. Das Pendelrohr kann teleskopierbar sein. Der zweite Handgriff ist rohrförmig ausgebildet und um das Pendelrohr herum angeordnet, so dass er bezüglich des Pendelrohrs verschiebbar ist; der zweite Handgriff kann über eine Klemmvorrichtung bezüglich des Pendelrohrs arretiert werden.

### Darstellung der Erfindung

Die der vorliegenden Erfindung zugrunde liegende Aufgabe besteht in der Beseitigung der genannten Nachteile wie eingeschränkte Mobilität, kleiner Aktionsradius, verzitterte Aufnahmen, hohes Gewicht oder schlechte Verstellbarkeit und der Schaffung eines Stativs, welches unverzitterte, bewegte Aufnahmen aus spontan bestimmbaren und schnell veränderbaren Perspektiven, unabhängig von der Position, welche der Kameramanns gegenüber dem gefilmten Objekt einnimmt, erlaubt. Dies bedeutet ferner, dass ein sich bewegendes Objekt, ohne die Aufnahme zu unterbrechen, verfolgt, seitlich oder dem Kameramann folgend gefilmt werden kann. Das Stativ vereint das flexible Arbeiten einer Hand-Kameraführung mit den stabilisierenden und die Reichweite vergrössernden Eigenschaften diverser bekannter Kameraführungshilfen.

Erfindungsgemäss wird dies mit einem Stativ der eingangs erwähnten Art durch die Merkmale des unabhängigen Patentanspruches ermöglicht. Das Stativ umfasst eine Tragekonstruktion mit einem Halteprofil und einem Stützprofil sowie einen Kamerakopf, welcher durch eine Linearführung mit dem Halteprofil verbunden ist. Zum beidhändigen Bedienen des Stativs weisen das Halteprofil einen Haltegriff und das Stützprofil einen Stützgriff auf. Zudem ist das Stützprofil über ein Verbindungsstück gelenkig mit dem Halteprofil verbunden, und das Stützprofil kann um eine Achse gegenüber dem Halteprofil verdreht werden.

Das Haltekonzept ermöglicht eine sehr definierte Kameraführung, indem das Halteprofil dank der gelenkigen Verbindung zum Stützprofil immer senkrecht gehalten werden kann. Dadurch kann der Kameramann mit der Hand am Halteprofil praktisch das gesamte Gewicht des Stativs übernehmen und mit der anderen Hand am Stützprofil die Kamera um Schwenk- und Neigeachse ausrichten und ihre Position im Raum seitlich stabilisieren. Diese Trennung von tragen und kontrollieren erleichtert die Koordination bei der Benutzung.

Bevorzugt ist das Verbindungsstück um eine Schwenkachse drehbar, jedoch nicht verschiebbar auf dem Halteprofil angebracht, und durch Rotation des mit dem Verbindungsstück verbundenen Stützprofils um die Schwenkachse ist der Kamerakopf um die Schwenkachse drehbar.

Dies ermöglicht es dem Benutzer, die Kamera sehr einfach, intuitiv und wie vom 3-Bein Stativ gewohnt zu schwenken, wobei der Monitor gegenüber dem Kameramann nicht verdreht wird.

Die Linearführung zur Verbindung des Kamerakopfs und des Halteprofils umfasst eine Aufhängung, insbesondere eine Feder-Dämpfer-Aufhängung, mit einem Tiefpassverhalten, so dass hochfrequente Anteile der Erschütterungen, welche auf das Stativ übertragen werden, herausgefiltert werden.

Die Feder-Dämpfer Aufhängung filtert durch ihr Tiefpassverhalten die hochfrequenten Anteile der Erschütterungen, welche der Kameramann bei abrupten Bewegungsabläufen wie beispielsweise Rennen oder Treppensteigen auf das Stativ überträgt, grösstenteils heraus damit ein stetigeres Bild resultiert. Dabei wird weder zusätzliches Gewicht zur Erhöhung der Trägheit verwendet noch bedingt das Stativ ein direktes Aufstützen auf dem Untergrund. Der Kameramann ist frei in seiner Bewegung und der Kameraausrichtung und kann sich bewegende Objekte aufnehmen, auch wenn sich diese auf einer nicht vorhersehbaren Bahn bewegen. Die Profile wirken als Verlängerung und erlauben filmerisch attraktive Aufnahmen aus bodennahen oder hohen Perspektiven ohne die Ergonomie bei der Benutzung zu verschlechtern. Die Kontrolle über die Kameraposition und deren Ausrichtung ist jederzeit sichergestellt.

Anstelle einer Feder-Dämpfung können andere Aufhängungsmittel eingesetzt werden, z. B. pneumatische oder hydraulische oder ein schnell reagierender Servoantrieb.

Mit Vorteil umfasst der Kopf ein Aufhängungsprofil, und die Linearführung umfasst eine Gleitlagerung, durch welche das Aufhängungsprofil im Halteprofil gelagert ist. Das Aufhängungsprofil ist somit bezüglich des Halteprofils in axiale Richtung verschiebbar und rotierbar.

Die Gleitlagerung des Kamerakopfs am Halteprofil lässt durch ihre zwei Freiheitsgrade ein Schwenken des Kopfs zu, ohne dass dabei das Spiel der Aufhängung beeinträchtigt wird.

Bevorzugt umfasst die gleitgelagerte Linearführung einerseits eine, dem Querschnitt des Aufhängungsprofils entsprechende, Aussparung im Verbindungsstück, andererseits einen, am Aufhängungsprofil angebrachten, zylindrischen Zapfen mit Dichtungsring.

Mit Vorteil bildet der Dichtungsring zusammen mit dem Halteprofil und einem Abschluss des Halteprofils eine Luftkammer. So wird durch das, bei Bewegung des Kamerakopfs entstehende, Ein- bzw. Ausströmen von Luft eine dämpfende Wirkung auf die Bewegung des Aufhängungsprofils im Halteprofil verursacht. Am Abschluss ist bevorzugt ein variabler Lufteinlass vorhanden.

Das Aufhängungsprofil ist mit Vorteil durch zwei vorgespannte, rohrförmige, elastische Elemente, bevorzugt Zugfedern, welche einerseits beide am Zapfen, andererseits je eines am Verbindungsstück und eines am Abschluss angebracht sind, mit dem Halteprofil verbunden.

Durch die beidseitig wirkende Feder-Dämpfer-Aufhängung kann das Stativ so ebenfalls in der invertierten Gebrauchslage die Aufnahme stabilisieren.

Bei einer bevorzugten Ausführungsform umfasst der Kamerakopf eine Trommel mit einem Käfig zur Aufnahme der Kamera und eine Gabel zur Verbindung der Trommel mit dem Aufhängungsprofil.

Die im Kamerakopf aufgenommene Kamera ist bevorzugt um eine Rollachse drehbar, so dass eine invertierte Gebrauchslage ermöglicht wird. Dazu ist mit Vorteil der Käfig zur Aufnahme der Kamera um die Rollachse drehbar in der Trommel gelagert. Durch eine Bremse, bevorzugt eine Backenbremse, kann der Käfig in einem beliebigen Winkel gegenüber der Trommel fixiert werden.

Mit Vorteil kann durch Rotation einer Manschette um den Stützgriff ein Neigewinkel einer im Kamerakopf aufgenommenen Kamera eingestellt werden, wobei die Rotation der

Manschette bevorzugt über flexible Kabelzughüllen und Faden (Bowdenzüge) zum Kamerakopf übertragen wird.

Die Kamera kann somit durch manuelle Betätigung des entsprechenden Bedienungselementes um die Neigeachse ausgerichtet werden. Diese Eigenschaft ist von grossem Vorteil, da sich bei bodennaher oder hoher Kameraposition das aufgenommene Objekt (eine Person beispielsweise) selten auf gleicher Höhe mit der Kamera befindet und diese erst durch entsprechende Ausrichtung den gewünschten Bildausschnitt einfangen kann.

Bevorzugt bewegt die Rotation der Manschette und eines damit verbundenen Drehrings den, in den flexiblen Kabelhüllen geführten, Faden. Durch eine Aufspannung des Fadens auf eine Umlenkrolle bewirkt dies eine Rotation der Trommel um die Neigeachse.

Eine bevorzugte Ausführungsform umfasst einen Monitor, welcher um eine Achse des Haltegriffs drehbar ist, so dass durch eine konstante Positionierbarkeit des Monitors im Blickfeld des Kameramanns die Kontrolle über die Aufnahme unabhängig von der Kameralage durchgehend gewährleistet werden kann.

Bevorzugt ist der Haltegriff rechtwinklig am Halteprofil angebracht und der Monitor sitzt an diesem Haltegriff, selbsthemmend um die Achse des Haltegriffs drehbar, auf einem Ring.

Daraus folgt, dass der Monitor am Haltegriff bei der tragenden Hand angebracht ist und somit, immer im Blickfeld des Kameramanns positioniert, der Kontrolle der laufenden Aufnahme dient. Eine um den Handgriff drehbare Lagerung des Monitors und die Ausrichtbarkeit der Kamera um die Rollachse ermöglichen einen raschen Wechsel zwischen normaler und invertierter Gebrauchslage. Dies erlaubt zügiges Arbeiten, wo die Umstellung bei herkömmlichen Geräten (sofern diese überhaupt einen alternativen Aufnahmemodus bieten) viel mehr Zeit erfordert.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1:: axonometrische Darstellung eines erfindungsgemässen Stativs in der normalen Gebrauchslage
- Fig 2:: partieller Schnitt durch das Halteprofil und die Aufhängung
- Fig 3:: Detailansicht des in Fig. 2 gekennzeichneten Ausschnitts
- Fig. 4:: Seitenriss eines erfindungsgemässen Stativs
- Fig. 5:: Aufriss eines erfindungsgemässen Stativs
- Fig. 6:: Darstellung der Verstellbarkeit des Displays
- Fig. 7:: axonometrische Darstellung eines erfindungsgemässen Stativs in der invertierten Gebrauchslage
- Fig. 8:: axonometrische Darstellung des Bedienelements für die Kameraneigung
- Fig. 9:: Detailansicht des in Fig. 8 gekennzeichneten Ausschnitts
- Fig. 10:: Seitenriss des Übertragungsmechanismus für Kameraneigung
- Fig. 11:: Aufriss des Übertragungsmechanismus für Kameraneigung

Grundsätzlich sind in den Figuren gleiche Teile mit gleichen Bezugszeichen versehen.

### Wege zur Ausführung der Erfindung

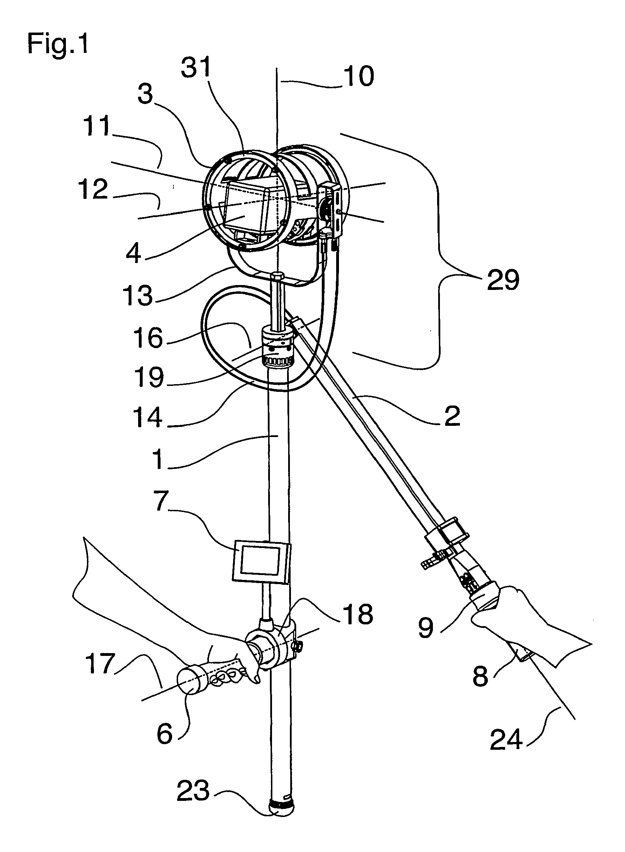

Ein erfindungsgemässes Stativ nach Fig. 1 besteht aus einem Halteprofil 1 und einem Stützprofil 2 und wird beidhändig mit der einen Hand am Haltegriff 6 und der andern am Stützgriff 8 bedient.

Die Kamera 4 befindet sich in einer Trommel 3 welche über eine Gabel 13 mit dem Aufhängungsprofil 5 verbunden ist. Die Kamera 4 ist gegenüber der Trommel 3 um die Rollachse 12 (definiert als Symmetrieachse der Trommel) ausrichtbar, da sie in einen Käfig 31 montiert ist, welcher in der Trommel 3 sitzt und, um die Rollachse 12 drehbar, im gewünschten Winkel zur Trommel 3 fixiert werden kann. Die Trommel 3 kann gegenüber der Gabel 13 um die Neigeachse 11 rotieren. Gabel 13 und Aufhängungsprofil 5 sind starr miteinander verbunden. Die Baugruppe bestehend aus Kamera 4, Trommel 3, Käfig 31, Gabel 13 und Aufhängungsprofil 5 wird im Folgenden als Kopf 29 bezeichnet und ist durch eine Feder-Dämpfer gelagerte Linearführung mit dem Halteprofil 1 verbunden. Der Kopf 29 kann sich in Richtung Schwenkachse 10 (definiert als Symmetrieachse des Halteprofils) relativ zum Halteprofil bewegen und um die Schwenkachse 10 gegenüber demselben verdreht werden. Durch die gewählte Linearführung fallen die Symmetrieachsen von Halte- und Aufhängungsprofil mit der Schwenkachse 12 zusammen.

Das Stützprofil 2 ist über das Verbindungsstück 19 gelenkig mit dem Halteprofil 1 verbunden. Einerseits kann es um die Schwenkachse 10 rotiert, andererseits um die Achse 16 (steht senkrecht auf Schwenkachse 10) gedreht und so der Winkel (gemessen in der Ebene senkrecht zur Achse 16) zwischen Stütz- und Hautprofil verändert werden.

Bei der Drehung des Stützprofils 2 um die Schwenkachse 10 wird das Verbindungsstück 19 und der Kopf 29 mitgedreht und so ein Kameraschwenk ausgeführt.

Das Halteprofil 1 besitzt einen kreisrunden Rohrquerschnitt und das Aufhängungsprofil 5 einen nichtrunden, bevorzugt quadratischen Querschnitt mit abgerundeten Ecken.

Die Linearführung des Aufhängungsprofils 5 im Halteprofil 1 wird im Wesentlichen von zwei Bauteilen übernommen. Das Verbindungsstück 19, welches eine, der Form nach dem Querschnitt des Aufhängungsprofils 5 entsprechende, Öffnung aufweist, lässt durch Gleitlagerung in dieser Öffnung eine Relativbewegung des Aufhängungs- gegenüber dem Halteprofil 1 in Richtung der Schwenkachse 10 zu. Durch dieselbe Öffnung wird aufgrund ihres nichtrunden Querschnitts eine Rotation des Verbindungsstücks 19 um die Schwenkachse 10 auf das Aufhängungsprofil 5 übertragen. Diese Rotation wird jedoch nicht auf das Halteprofil 1 übertragen, da das Verbindungsstück 19, auf der Schwenkachse 10 drehbar, auf dem Halteprofil 1 gelagert ist. Es drehen sich bei einem Kameraschwenk demnach nur Stützprofil 2, Verbindungsstück 19 und Kopf 29. Das Halteprofil, der Haltegriff und das daran angebrachtem Display verbleiben im ergonomischen Arbeitsbereich des Kameramanns.

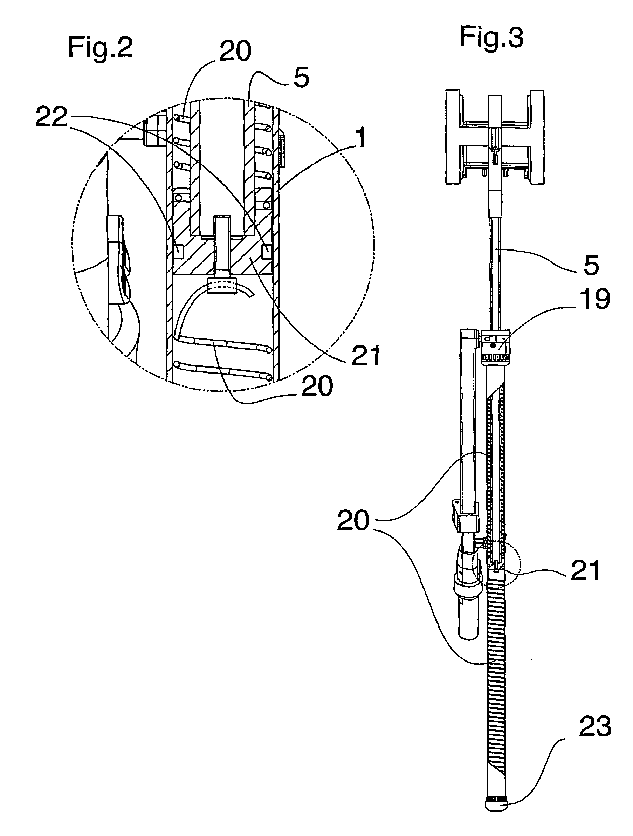

Fig. 2 zeigt das zweite Bauteil der erwähnten Linearführung als vergrösserten Ausschnitt aus der Schnittansicht von Fig. 3. Am Ende des Aufhängungsprofils 5 ist ein zylindrischer Zapfen 21, welcher von einem Dichtungsring 22 umfasst wird, angebracht. Auf dem Dichtungsring 22 gleiten Aufhängungsprofil 5 und Zapfen 21 in axialer Richtung und rotieren in azimutaler Richtung relativ zum Halteprofil 1. Durch den Dichtungsring 22 und einen variablen Lufteinlass am Abschluss 23 entsteht eine schliessbare Luftkammer und somit ergibt sich eine variable Luftdämpfung zwischen Aufhängungs- und Halteprofil. Die Zugfedern 20 sind einerseits an Abschluss 23 bzw. Verbindungsstück 19, andererseits am Zapfen 21 befestigt. Sie nehmen zusammen mit dem Kopf 29 je nach Gebrauchslage (normal oder invertiert) aufgrund der Wirkung der Schwerkraft zwei verschiedene Gleichgewichtslagen ein.

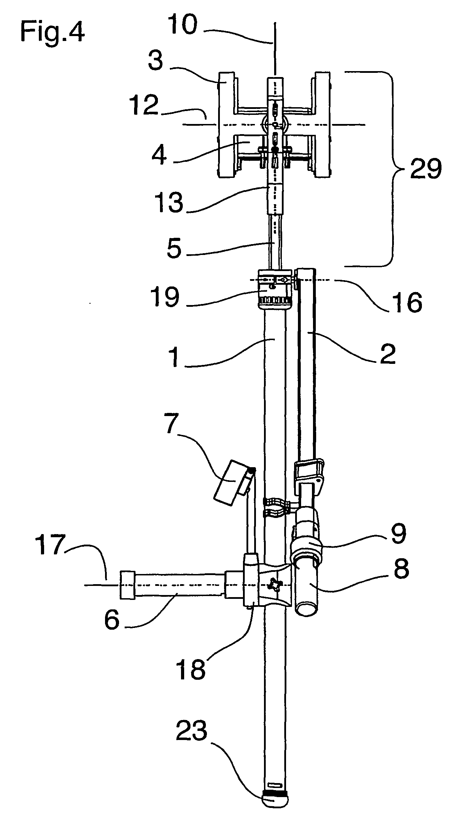

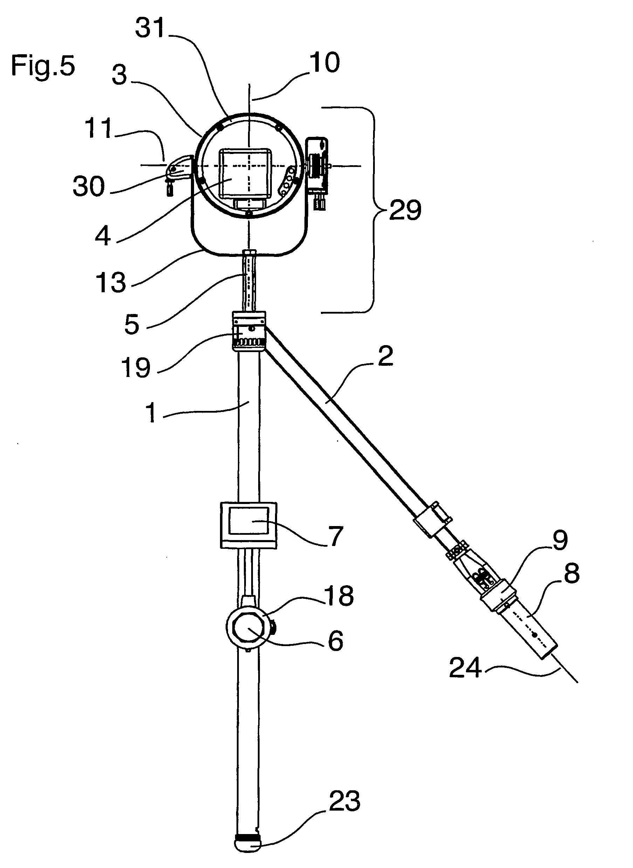

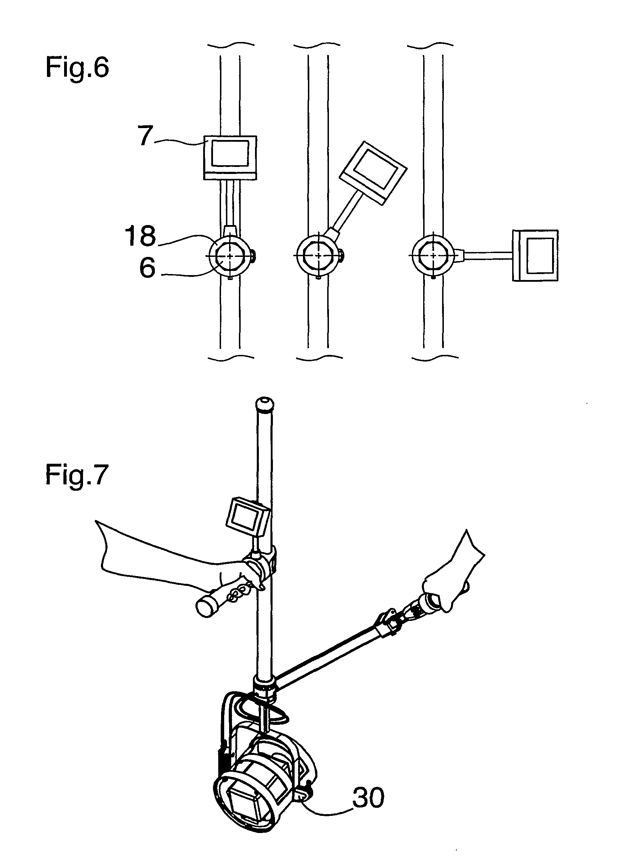

Fig. 4 und Fig. 5 (bei welchen die Kabelzughüllen 14 und Faden 26 der Übersicht halber nicht dargestellt sind) zeigen wie am Haltegriff 6 ein Display 7 über einen, um die Griffachse 17 rotierbaren, Ring 18 befestigt ist. In Fig. 6 ist ersichtlich wie das Display 7 um die Griffachse 17 abgedreht werden kann. Dieses Abdrehen ermöglicht einen Gebrauch des Stativs im invertierten Modus wie es Fig. 7 zeigt. Dazu muss neben dem Display 7 ebenfalls die Kamera 4 gedreht werden indem der, um die Rollachse drehbare Kamerakäfig 31 an der Bremse 30 entfixiert, um die Rollachse 12 horizontal ausgerichtet und schliesslich in der gewünschten Position wieder fixiert wird.

Am Stützgriff 8, welcher fix am Stützprofil 2 angebracht ist, befindet sich eine um die Griffachse 24 (Symmetrieachse des Stützprofils 2) drehbare Manschette 9.

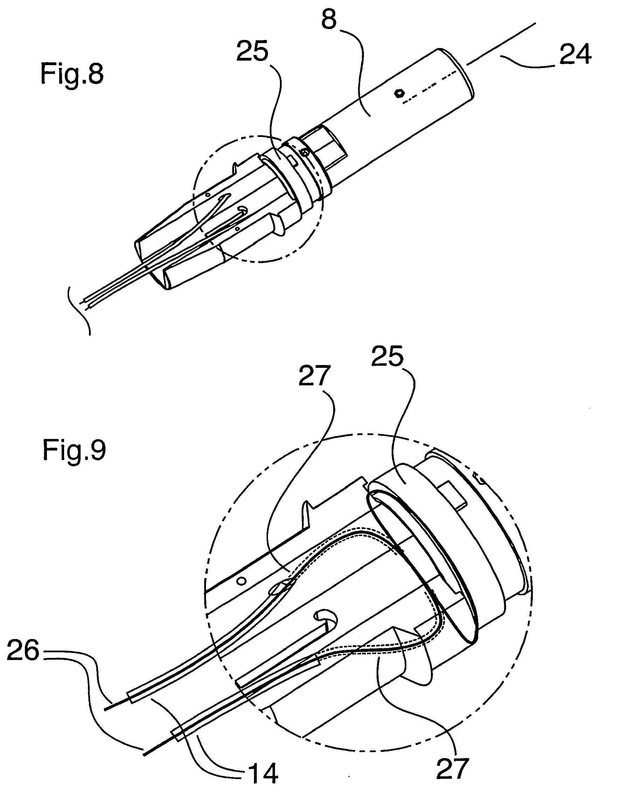

Fig. 8 zeigt separat den Stützgriff 8 wobei die Manschette 9, welche mit dem Drehring 25 fest verbunden ist, nicht dargestellt ist. Fig. 9 zeigt die Detailansicht des in Fig. 8 gekennzeichneten Ausschnitts. Durch die Kabelzughüllen 14 wird ein Faden 26 über zwei im Stützgriff 8 integrierte Kanäle 27 auf den Drehring 25 geführt. Durch Drehung der Manschette 9 wird der Faden 26, welcher an einer bestimmten Stelle mit dem Drehring verklebt ist, entlang der Kabelzughüllen 14 in eine, der Drehung entsprechende, Richtung gezogen.

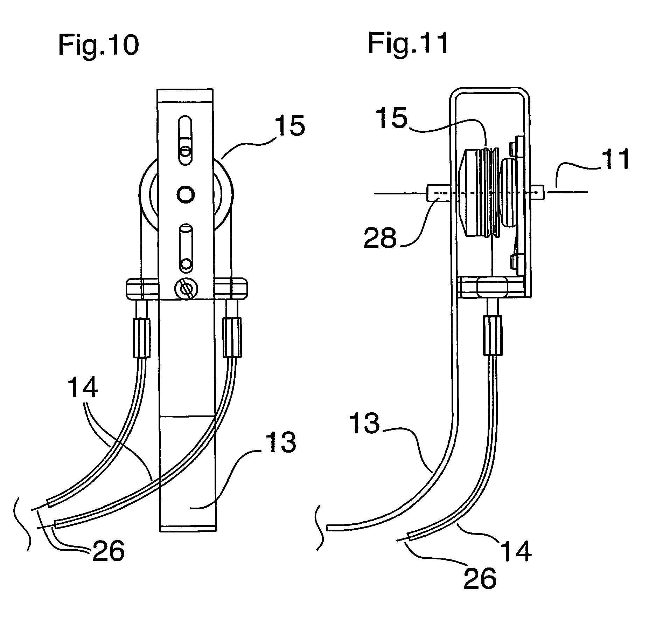

Fig. 10 und Fig. 11 zeigen wie am anderen Ende der Kabelzüge 14 der Faden 26 an der Gabel 13 über eine Umlenkrolle 15 gespannt ist. Diese Umlenkrolle 15 setzt die Fadenbewegung in eine Rotation der Trommel 3 um die Neigeachse 11 um und stellt sicher, dass der Faden 26 über seinen ganzen Verlauf unter Zug steht.

Der Bolzen 28 ist mit der Umlenkrolle 15 und der Trommel 3 (in Fig. 10 und Fig. 11 nicht dargestellt) verbunden und überträgt somit eine Drehung von der Umlenkrolle 15 auf die Trommel 3.

Die Erfindung ist nicht auf das dargestellte Ausführungsbeispiel beschränkt. So können beispielsweise die Linearführung oder die entsprechende Dämpfung auch mit anderen Mitteln realisiert werden. Dasselbe gilt für die Bedienung der Freiheitsgrade des Stativs, insbesondere der Roll- und Neigeachse. So kann beispielsweise die Übertragung der Bewegung der Manschette auch hydraulisch, elektrisch oder durch eine drahtlose Verbindung (z. B. Funkverbindung) zum Kamerakopf erfolgen.

Die dargestellte Ausführungsform ist dazu geeignet, von der Bedienperson beidhändig getragen zu werden. Es ist aber denkbar, dass zusätzlich eine Abstützung am Körper der Bedienperson erfolgt, z. B. durch einen Bauchgurt, einen Schulterriemen oder durch andere Mittel.

Um die Ergonomie des Stativs noch weiter zu verbessern, können - neben der beschriebenen Verstellbarkeit des Monitors und der ohnehin vorhandenen Freiheitsgrade - weitere Verstellmöglichkeiten gegeben sein. So können beispielsweise die Handgriffe in axialer Richtung zum Halte- bzw. Stützprofil verschiebbar ausgebildet sein und/oder die Länge des Halte- bzw. Stützprofils kann verändert werden (z. B. durch einen Teleskopmechanismus).

## Patentansprüche

1. Stativ für kompakte Videokameras umfassend eine Tragekonstruktion mit einem Halteprofil (1) und einem Stützprofil (2) sowie einen Kamerakopf (29), welcher durch eine Linearführung mit dem Halteprofil (1) verbunden ist, wobei zum beidhändigen Bedienen des Stativs das Halteprofil einen Haltegriff (6) und das Stützprofil einen Stützgriff (9) aufweisen, wobei das Stützprofil (2) über ein Verbindungsstück (19) gelenkig mit dem Halteprofil (1) verbunden ist, und wobei das Stützprofil (2) um eine Achse (16) gegenüber dem Halteprofil (1) verdreht werden kann, **dadurch gekennzeichnet, dass** die Linearführung zur Verbindung des Kamerakopfs (29) und des Halteprofils (1) eine Aufhängung mit einem Tiefpassverhalten umfasst, so dass hochfrequente Anteile der Erschütterungen, welche auf das Stativ übertragen werden, herausgefiltert werden.

2. Stativ nach Anspruch 1, **dadurch gekennzeichnet, dass** das Verbindungsstück (19) um eine Schwenkachse (10) drehbar, jedoch nicht verschiebbar auf dem Halteprofil (1) angebracht ist und durch Rotation des mit dem Verbindungsstück (19) verbundenen Stützprofils (2) um die Schwenkachse (10) der Kamerakopf (29) um die Schwenkachse (10) drehbar ist.

3. Stativ nach Anspruch 1 oder 2, **dadurch gekennzeichnet, dass** die Aufhängung eine Feder-Dämpfer-Aufhängung ist.

4. Stativ nach einem der Ansprüche 1 bis 3, **dadurch gekennzeichnet, dass** der Kopf (29) ein Aufhängungsprofil (5) umfasst, dass die Linearführung eine Gleitlagerung umfasst, durch welche das Aufhängungsprofil (5) im Halteprofil (1) gelagert ist und dass das Aufhängungsprofil (5) bezüglich des Halteprofils (1) in axiale Richtung verschiebbar und rotierbar ist.

5. Stativ nach Anspruch 4, **dadurch gekennzeichnet, dass** die gleitgelagerte Linearführung einerseits eine, dem Querschnitt des Aufhängungsprofils (5) entsprechende, Aussparung im Verbindungsstück (19), andererseits einen, am Aufhängungsprofil (5) angebrachten, zylindrischen Zapfen (21) mit Dichtungsring (22) umfasst.

6. Stativ nach Anspruch 5, **dadurch gekennzeichnet, dass** der Dichtungsring (22) zusammen mit dem Halteprofil (1) und einem Abschluss (23) des Halteprofils (1) eine Luftkammer bildet und so durch das, bei Bewegung des Kamerakopfs (29) entstehende, Ein- bzw. Ausströmen von Luft eine dämpfende Wirkung auf die Bewegung des Aufhängungsprofils (5) im Halteprofil (1) verursacht wird, wobei am Abschluss (23) bevorzugt ein variabler Lufteinlass vorhanden ist.

7. Stativ nach den Ansprüchen 3 und 6, **dadurch gekennzeichnet, dass** das Aufhängungsprofil (5) durch zwei vorgespannte, rohrförmige, elastische Elemente, bevorzugt Zugfedern (20), welche einerseits beide am Zapfen (21), andererseits je eines am Verbindungsstück (19) und eines am Abschluss (23) angebracht sind, mit dem Halteprofil (1) verbunden ist.

8. Stativ nach einem der Ansprüche 4 bis 7, **dadurch gekennzeichnet, dass** der Kamerakopf (29) eine Trommel (3) mit einem Käfig (31) zur Aufnahme der Kamera (4) und eine Gabel (13) zur Verbindung der Trommel (3) mit dem Aufhängungsprofil (5) umfasst.

9. Stativ nach einem der Ansprüche 1 bis 8, **dadurch gekennzeichnet, dass** eine im Kamerakopf (29) aufgenommene Kamera um eine Rollachse (12) drehbar ist, so dass eine invertierte Gebrauchslage ermöglicht wird.

10. Stativ nach den Ansprüchen 8 und 9, **dadurch gekennzeichnet, dass** der Käfig (31) zur Aufnahme der Kamera (4) um die Rollachse (12) drehbar in der Trommel (3) gelagert ist und durch eine Bremse (30), bevorzugt eine Backenbremse, in einem beliebigen Winkel gegenüber der Trommel (3) fixiert werden kann.

11. Stativ nach einem der Ansprüche 1 bis 10, **dadurch gekennzeichnet, dass** durch Rotation einer Manschette (9) um den Stützgriff (8) ein Neigewinkel einer im Kamerakopf (29) aufgenommenen Kamera (4) eingestellt werden kann, wobei die Rotation der Manschette (9) bevorzugt über flexible Kabelzughüllen (14) und Faden (26) übertragen wird.

12. Stativ nach den Ansprüchen 8 und 11, **dadurch gekennzeichnet, dass** die Rotation der Manschette (9) und eines damit verbundenen Drehrings (25) den, in den flexiblen Kabelhüllen (14) geführten, Faden (26) bewegt und durch eine Aufspannung des Fadens (26) auf eine Umlenkrolle (15) eine Rotation der Trommel (3) um die Neigeachse (11) bewirkt.

13. Stativ nach einem der Ansprüche 1 bis 12, **gekennzeichnet durch** einen Monitor (7), welcher um eine Achse (17) des Haltegriffs (6) drehbar ist, so dass **durch** eine konstante Positionierbarkeit des Monitors (7) im Blickfeld des Kameramanns die Kontrolle über die Aufnahme unabhängig von der Kameralage durchgehend gewährleistet werden kann.

14. Stativ nach Anspruch 13, **dadurch gekennzeichnet, dass** der Haltegriff (6) rechtwinklig am Halteprofil (1) angebracht ist und der Monitor (7) an diesem Haltegriff (6), selbsthemmend um die Achse (17) des Haltegriffs (6) drehbar, auf einem Ring (18) sitzt.

15. Stativ nach Anspruch 1, bestehend aus einer Trommel, welche die Kamera trägt, einem gabelförmigen Führungsprofil zur Verbindung der Trommel mit der Tragekonstruktion aus zwei gelenkig verbundenen Profilen mit Tragelementen, und einem Monitor, wobei sich ein Aufhängungsprofil (5) des Kamerakopfs (29) durch Gleitlagerung im Halteprofil (1) in axiale Richtung verschieb- und rotierbar bewegen kann und durch eine Feder-Dämpfer-Aufhängung mit demselben verbunden ist, und dass durch die Drehbarkeit des Monitors (7) um eine Griffachse (17) und die Drehbarkeit der Kamera (4) um eine Rollachse (12) eine invertierte Gebrauchslage ermöglicht wird, dass weiter durch eine konstante Positionierbarkeit des Displays (7) im Blickfeld des Kameramanns die Kontrolle über die Aufnahme unabhängig von der Kameralage durchgehend gewährleistet wird und dass durch eine Rotation des Stützprofils (2) um eine Schwenkachse (10) der Kamerakopf (29) eine Schwenkbewegung erfährt, dass schliesslich durch eine Rotation einer Manschette (9) um einen Stützgrifif (8) der Neigewinkel der Kamera (4) über eine, durch flexible Kabefzughüllen (14) und Faden (26) übertragene, Bewegung eingestellt werden kann.

## Claims

1. Support for compact video cameras comprising a supporting structure having a holding profile (1) and a supporting profile (2) as well as a camera head (29) that is connected to the holding profile (1) by a linear guide, the holding profile having a holding grip (6) and the supporting profile having a supporting grip (9) for the purpose of two-handed operation of the support, the supporting profile (2) being connected in an articulated fashion to the holding profile (1) via a connection piece (19), and it being possible to rotate the supporting profile (2) about an axis (16) relative to the holding profile (1), **characterized in that** in order to connect the camera head (29) and the holding profile (1) the linear guide comprises a suspension with a lowpass response such that high frequency components of the vibrations that are transmitted to the support are filtered out.

2. Support according to Claim 1, **characterized in that** the connection piece (19) is fitted such that it can rotate about a swivel axis (10), but cannot be displaced on the main profile (1), and the camera head (29) can be rotated about the swivel axis (10) by rotating the supporting profile (2) connected to the connection piece (19) about the swivel axis (10).

3. Support according to Claim 1 or 2, **characterized in that** the suspension is a spring-damper suspension.

4. Support according to one of Claims 1 to 3, **characterized in that** the head (29) comprises a suspension profile (5), **in that** the linear guide comprises a sliding bearing via which the suspension profile (5) is mounted in the holding profile (1), and **in that** the suspension profile (5) can be displaced and rotated in the axial direction relative to the holding profile (1).

5. Support according to Claim 4, **characterized in that** the slide-mounted linear guide comprises, at one end, a cutout, corresponding to the cross section of the suspension profile (5), in the connection piece (19) and, at the other end, a cylindrical pin (21) fitted on the suspension profile (5) and having a sealing ring (22).

6. Support according to Claim 5, **characterized in that** together with the holding profile (1) and a seal (23) of the holding profile (1) the sealing ring (22) forms an air chamber and so a damping action on the movement of the suspension profile (5) in the holding profile (1) is caused by the inflow or outflow of air produced during movement of the camera head (29), a variable air inlet preferably being present at the seal (23).

7. Support according to Claims 3 and 6, **characterized in that** the suspension profile (5) is connected to the holding profile (1) by two prestressed, tubular, elastic elements, preferably tension springs (20), which, at one end, are both fitted on the pin (21) while, at the other end, one each is fitted on the connection piece (19) and on the seal (23).

8. Support according to one of Claims 4 to 7, **characterized in that** the camera head (29) comprises a drum (3) with a cage (31) for accommodating the camera (4), and a fork (13) for connecting the drum (3) to the suspension profile (5).

9. Support according to one of Claims 1 to 8, **characterized in that** a camera accommodated in the camera head (29) can be rotated about a roll axis (12) so as to enable an inverted position of use.

10. Support according to Claims 8 and 9, **characterized in that** the cage (31) for accommodating the camera (4) is mounted in the drum (3) such that it can rotate about the roll axis (12), and can be fixed at any desired angle relative to the drum (3) via a brake (30), preferably a block brake.

11. Support according to one of Claims 1 to 10, **characterized in that** a tilt angle of a camera (4) accommodated in the camera head (29) can be set by rotating a sleeve (9) about the supporting grip (8), rotation of the sleeve (9) preferably being transmitted via flexible cable pull sleeves (14) and wires (26).

12. Support according to Claims 8 and 11, **characterized in that** the rotation of the sleeve (11) and of a rotating ring (25) connected thereto moves the wire (26) guided in the flexible cable sleeves (14), and effects a rotation of the drum (3) about the tilt axis (11) by way of clamping the wire (26) against a deflecting roller (15).

13. Support according to one of Claims 1 to 12, **characterized by** a monitor (11) which can be rotated about an axis (17) of the holding grip (6) such that control of recording can be ensured continuously independently of camera position owing to the fact that the monitor (7) can be positioned constantly in the field of view of the cameraman.

14. Support according to Claim 13, **characterized in that** the holding grip (6) is fitted at right angles on the holding profile (1), and the monitor (7) is seated on a ring (18) on this holding grip (6) in a self-locking fashion such that it can rotate about the axis (17) of the holding grip (6).

15. Support according to Claim 1, comprising a drum that supports the camera, a fork-shaped guide profile for connecting the drum to the supporting structure composed of two profiles connected in an articulated fashion and having supporting elements, and a monitor, in which a suspension profile (5) of the camera head (29) is capable of moving displaceably and rotatably in an axial direction by virtue of a sliding bearing in the holding profile (1) and is connected to said camera head by a spring-damper suspension, in which an inverted position of use is enabled by the rotatability of the monitor (7) about a gripping axis (17) and the rotatability of the camera (4) about a roll axis (12), in which, furthermore, the control of recording can be ensured continuously independently of the camera position owing to the fact that the display (7) can be positioned constantly in the field of view of the cameraman, in which the camera head (29) experiences a swiveling movement due to the rotation of the supporting profile (2) about a swivel axis (10), and, finally, in which the tilt angle of the camera (4) can be set by a rotation of a sleeve (9) about a supporting grip (8) via a movement transmitted by flexible cable pull sleeves (14) and wires (26).

## Revendications

1. Trépied pour caméras vidéo compactes, comprenant une construction de support avec un profilé de maintien (1) et un profilé d'appui (2), ainsi qu'une tête de caméra (29) reliée au profilé de maintien (1) au moyen d'un guidage linéaire, dans lequel, pour utiliser le trépied avec les deux mains, le profilé de maintien comporte une poignée de maintien (6) et le profilé d'appui une poignée d'appui (8), dans lequel le profilé d'appui (2) est relié de façon articulée au profilé de maintien (1) par le biais d'une pièce de liaison (19), et dans lequel le profilé d'appui (2) peut être tourné autour d'un axe (16) par rapport au profilé de maintien (1), **caractérisé en ce que** le guidage linéaire pour la liaison entre la tête de caméra (29) et le profilé de maintien (1) comprend un dispositif de suspension avec un comportement de filtre passe-bas, de sorte que les portions à haute fréquence des vibrations transmises au trépied sont filtrées.

2. Trépied selon la revendication 1, **caractérisé en ce que** la pièce de liaison (19) est fixée au profilé de maintien (1) de façon rotative autour d'un axe de pivotement (10), mais sans pouvoir coulisser, et **en ce que** la tête de caméra (29) peut tourner autour de l'axe de pivotement (10), par rotation du profilé d'appui (2) relié à la pièce de liaison (19) autour de l'axe de pivotement (10).

3. Trépied selon la revendication 1 ou 2, **caractérisé en ce que** le dispositif de suspension est un dispositif de suspension à ressort-amortisseur.

4. Trépied selon l'une des revendications 1 à 3, **caractérisé en ce que** la tête (29) comprend un profilé de suspension (5), **en ce que** le guidage linéaire comprend un palier de glissement, par lequel le profilé de suspension (5) est monté dans le profilé de maintien (1), et **en ce que** le profilé de suspension (5) peut être déplacé dans le sens axial et mis en rotation par rapport au profilé de maintien (1).

5. Trépied selon la revendication 4, **caractérisé en ce que** le guidage linéaire à palier de glissement comprend d'une part une échancrure dans la pièce de liaison (19), correspondant à la section transversale du profilé de suspension (5), et d'autre part une cheville cylindrique (21) avec bague d'étanchéité (22), fixée au profilé de suspension (5).

6. Trépied selon la revendication 5, **caractérisé en ce que** la bague d'étanchéité (22) forme une chambre à air, conjointement avec le profilé de maintien (1) et une terminaison (23) du profilé de maintien (1), de manière à produire un effet amortisseur sur le mouvement du profilé de suspension (5) dans le profilé de maintien (1), au moyen de l'air entrant et sortant lors d'un mouvement de la tête de caméra (29), une entrée d'air variable étant de préférence prévue sur la terminaison (23).

7. Trépied selon les revendications 3 et 6, **caractérisé en ce que** le profilé de suspension (5) est relié au profilé de maintien (1) par deux éléments élastiques tubulaires précontraints, de préférence des ressorts de traction (20), fixés d'une part tous deux à la cheville (21), d'autre part l'un à la pièce de liaison (19) et l'autre à la terminaison (23).

8. Trépied selon l'une des revendications 4 à 7, **caractérisé en ce que** la tête de caméra (29) comprend un tambour (3) avec une cage (31) destinée à recevoir la caméra (4), ainsi qu'une fourche (13) pour relier le tambour (3) au profilé de suspension (5).

9. Trépied selon l'une des revendications 1 à 8, **caractérisé en ce qu'**une caméra reçue dans la tête de caméra (29) peut tourner autour d'un axe de roulement (12), de manière à pouvoir inverser la position d'utilisation.

10. Trépied selon les revendications 8 et 9, **caractérisé en ce que** la cage (31) destinée à recevoir la caméra (4) est montée dans le tambour (3) de façon rotative autour de l'axe de roulement (12), et peut être bloquée avec un angle au choix par rapport au tambour (3), au moyen d'un frein (30), de préférence un frein à mâchoires.

11. Trépied selon l'une des revendications 1 à 10, **caractérisé en ce que** par rotation d'une manchette (9) autour de la poignée d'appui (8), il est possible de régler un angle d'inclinaison d'une caméra (4) reçue dans la tête de caméra (29), la rotation de la manchette (9) étant de préférence transmise par des gaines de câbles souples (14) et du fil (26).

12. Trépied selon les revendications 8 et 11, **caractérisé en ce que** la rotation de la manchette (9) et d'une bague de rotation (25) reliée à celle-ci met en mouvement le fil (26) guidé dans les gaines de câble souples (14), tout en provoquant une rotation du tambour (3) autour de l'axe d'inclinaison (11), par la suspension du fil (26) sur un galet de renvoi (15).

13. Trépied selon l'une des revendications 1 à 12, **caractérisé par** un moniteur (7) rotatif autour d'un axe (17) de la poignée de maintien (6), de sorte que par une capacité de positionnement constante du moniteur (7) dans le champ de vision du caméraman, le contrôle sur l'enregistrement peut être garanti en continu, indépendamment de la position de la caméra.

14. Trépied selon la revendication 13, **caractérisé en ce que** la poignée de maintien (6) est fixée à angle droit sur le profilé de maintien (1), et le moniteur (7) repose sur une bague (18) sur cette poignée de maintien (6), de façon rotative autour de l'axe (17) de la poignée de maintien (6), avec blocage automatique.

15. Trépied selon la revendication 1, constitué d'un tambour portant la caméra, d'un profilé de guidage en forme de fourche pour relier le tambour à la construction de support, formée par deux profilés articulés avec des éléments de support, et d'un moniteur, dans lequel un profilé de suspension (5) de la tête de caméra (29) est déplaçable de façon coulissante dans le sens axial et de façon rotative, au moyen d'un palier de glissement dans le profilé de maintien (1), tout en étant relié à celui-ci par un dispositif de suspension à ressort-amortisseur, et dans lequel la capacité de rotation du moniteur (7) autour d'un axe de poignée (17) et la capacité de rotation de la caméra (4) autour d'un axe de roulement (12) permettent d'inverser la position d'utilisation, dans lequel une capacité de positionnement constante de l'affichage (7) dans le champ de vision du caméraman permet en outre de garantir en continu le contrôle sur l'enregistrement, indépendamment de la position de la caméra, dans lequel par rotation du profilé d'appui (2) autour d'un axe de pivotement (10), la tête de caméra (29) effectue un mouvement de pivotement, et dans lequel la rotation d'une manchette (9) autour d'une poignée d'appui (8) permet enfin d'ajuster l'angle d'inclinaison de la caméra (4), par un mouvement transmis par des gaines de câble souples (14) et du fil (26).
